# EUROPEAN PATENT APPLICATION

(11) **EP 1 647 478 A1**
(43) Date of publication of application: **19.04.2006**
(21) Application number: 05022676.0
(22) Date of filing: 18.10.2005
(51) Int. Cl.: B62K 19/30, B62K 19/12

(54) **Vehicle body frame and motorcycle provided with the vehicle body frame**

(30) Priority: 07.10.2005 JP 2005294465; 18.10.2004 JP 2004303488
(71) Applicant: YAMAHA HATSUDOKI KABUSHIKI KAISHA, Iwata-shi, Shizuoka 438-8501 (JP)
(72) Inventor: Asamura, Kinji, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a vehicle body frame (2) comprising a head pipe (3), a main frame (5) extending from the head pipe (3) toward the rear of the vehicle, and a rear frame (7) extending from the main frame (5) toward the rear of the vehicle, wherein the body frame (2) includes an annular portion (A) being at least partially formed by the rear frame (7).

## Description

The present invention relates to a vehicle body frame, in particular including a head pipe, by which a handle is supported to be freely steered, a main frame extending from the head pipe toward the rear of a vehicle, and a rear frame extending from the main frame toward the rear of the vehicle and above the rear wheel, and a motorcycle provided with the vehicle body frame.

Some vehicle body frames for motorcycles include a head pipe, by which a handle is supported to be freely steered left and right, a main frame extending from the head pipe toward the rear of a vehicle, and a rear frame extending from the main frame toward the rear of the vehicle and above the rear wheel.

As such vehicle body frame, there are conventionally ones in the form of a monocock frame, which is formed by butting left and right frame members of sheet metal against each other to weld-bond the same (for example, see JP-A-5-238462)

By the way, with the vehicle body frame disclosed in JP-A-5-238462, a rear frame extending above a rear wheel is rectangular-shaped as viewed in transverse cross section, and cylindrical-shaped to extend in a longitudinal direction as viewed in plan view. In the case where the vehicle body frame of this type is adopted in, for example, motorcycles having a large displacement, or a tandem seat can be mounted, the rear frame is made large in width and lengthy in the longitudinal direction, which causes a problem that the frame is enlarged in surface area and correspondingly increased in weight.

Here, in order to lessen the problem of an increase in weight, it is conceivable to form, for example, a lightening hole or holes in the rear frame, but there is a fear of a problem that when a lightening hole or holes are formed in the cylindrical-shaped frame, complexity is involved in construction, or it is hard to ensure a necessary rigidity of the frame.

The invention has been thought of in view of the conventional situation and has its object to provide a vehicle body frame capable of ensuring a necessary rigidity for a vehicle body while avoiding a problem of an increase in weight and complexity in construction, in case of making a rear frame large in size according to demand, and a motorcycle provided with the vehicle body frame.

This objective is solved by a vehicle body frame comprising a head pipe, a main frame extending from the head pipe toward the rear of the vehicle, and a rear frame extending from the main frame toward the rear of the vehicle, wherein the body frame includes an annular portion being at least partially formed by the rear frame.

Preferably, the annular portion is annular as viewed in plan view.

The present vehicle body frame further preferably comprises left and right side portions, which form the annular portion of the rear frame, and which are curved in shape to be opened outwardly or inwardly of the annular portion as viewed in a transverse cross section across the left and right side portions.

Therein, the vehicle body frame still further preferably comprises an annular portion formed by a rear portion of the main frame, and the left and right side portions and a rear lateral side portion of the rear frame, and/or an annular portion formed by a rear portion of the main frame, and the left and right side portions and a middle lateral side portion of the rear frame, and /or an annular portion formed by a rear portion of the main frame, and the left and right side portions and a front lateral side portion of the rear frame, and/or an annular portion formed by the left and right side portions and a lateral side portion of the rear frame.

Further preferably, several annular portions are provided.

According to a preferred embodiment, the vehicle body frame comprises left and right frame pieces, which are provided by integrally forming the head pipe, the main frame, and the rear frame and divided into a left portion and a right portion in a vehicle width direction, the left and right frame pieces being weld-bonded.

According to a further preferred embodiment, the main frame and the rear frame are divided.

According to another preferred embodiment, the rear frame is divided into a left portion and a right portion in a vehicle width direction.

According to yet another preferred embodiment, the rear frame is divided into a front portion and a rear portion.

Further beneficially, a space inside the annular portion makes an article storage space.

Therein, the article storage space may be covered by a seat to be openable and closable.

Still further preferably, the left and right side portions of the rear frame serve as an exterior member.

Yet further preferably, the left and right side portions are formed with seat bases.

Besides, the lateral side portion might be curved in shape to be opened outwardly or inwardly of the annular portion as viewed in transverse cross section.

The above objective is further solved by a motorcycle comprising the vehicle body frame according to one of embodiments above.

In the following, the present invention is explained in greater detail with respect to several embodiments thereof in conjunction with the accompanying drawings, wherein:
- Fig. 1: is a side view showing a motorcycle, to which a vehicle body frame according to an embodiment is applied,
- Fig. 2: is a side view showing the vehicle body frame,
- Fig. 3: is a perspective view showing the vehicle body frame,
- Fig. 4: is a plan view showing the vehicle body frame,
- Fig. 5: is a cross sectional view showing a head pipe of the vehicle body frame,
- Fig. 6: is a cross sectional view showing a main frame of the vehicle body frame,
- Fig. 7: is a cross sectional view showing the main frame (a cross sectional view taken along the line VII-VII in Fig. 2),
- Fig. 8: is a cross sectional view showing the main frame (a cross sectional view taken along the line VIII-VIII in Fig. 2),
- Fig. 9: is a plan view showing a rear frame of the vehicle body frame (a view as viewed along an arrow IX in Fig. 2),
- Fig. 10: is a cross sectional view showing the rear frame (a cross sectional view taken along the line X-X in Fig. 2),
- Fig. 11: is a cross sectional view showing the rear frame (a cross sectional view taken along the line XI-XI in Fig. 2),
- Fig. 12: is a cross sectional view showing the rear frame (a cross sectional view taken along the line XII-XII in Fig. 2),
- Fig. 13: is a cross sectional view showing pivots of the main frame (a cross sectional view taken along the line XIII-XIII in Fig. 2),
- Fig. 14: is a cross sectional view showing a shape of rear end cross portions of the rear frame,
- Fig. 15: is a schematic view showing a configuration of a vehicle body frame,
- Fig. 16: is a schematic view showing a further configuration of a vehicle body frame,
- Fig. 17: is a schematic view showing a still further configuration of a vehicle body frame,
- Fig. 18: is a schematic view showing a still further configuration of a vehicle body frame,
- Fig. 19: is a schematic view showing a still further configuration of a vehicle body frame,
- Fig. 20: is a schematic view showing a still further configuration of a vehicle body frame,
- Fig. 21: is a cross sectional view showing a modification of left and right side portions of a rear frame,
- Fig. 22: is a cross sectional view showing a modification of a rear end cross portion of a rear frame,
- Fig. 23: is a cross sectional view showing a further modification of the rear end cross portion, and
- Fig. 24: is a cross sectional view showing a still further modification of the rear end cross portion.

An embodiment will be described below with reference to the drawings.

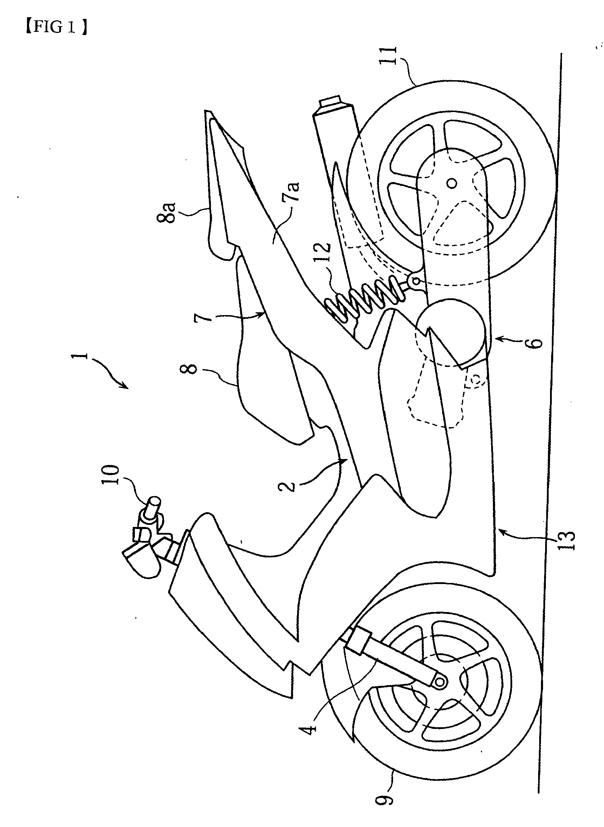

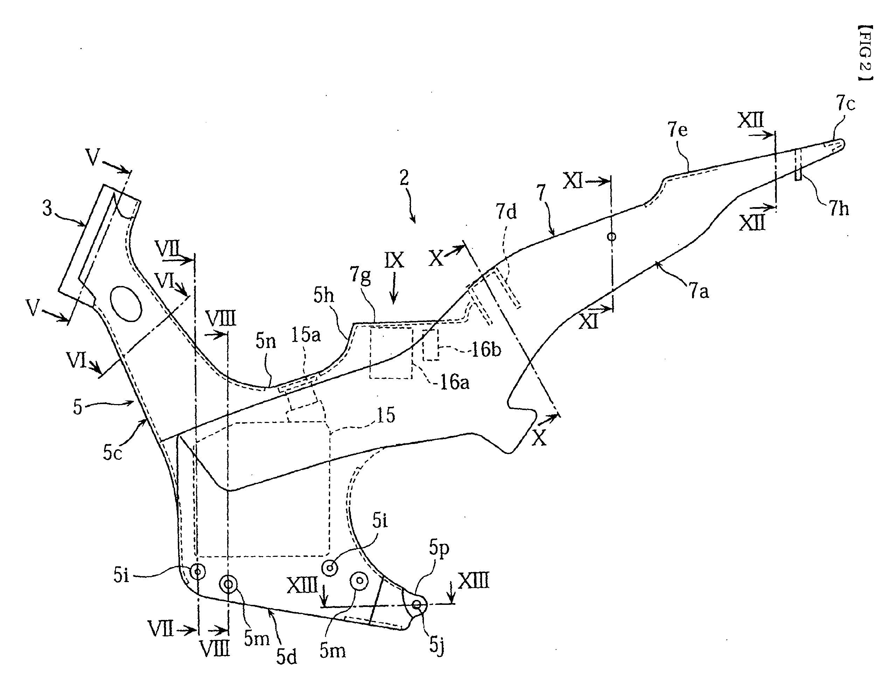

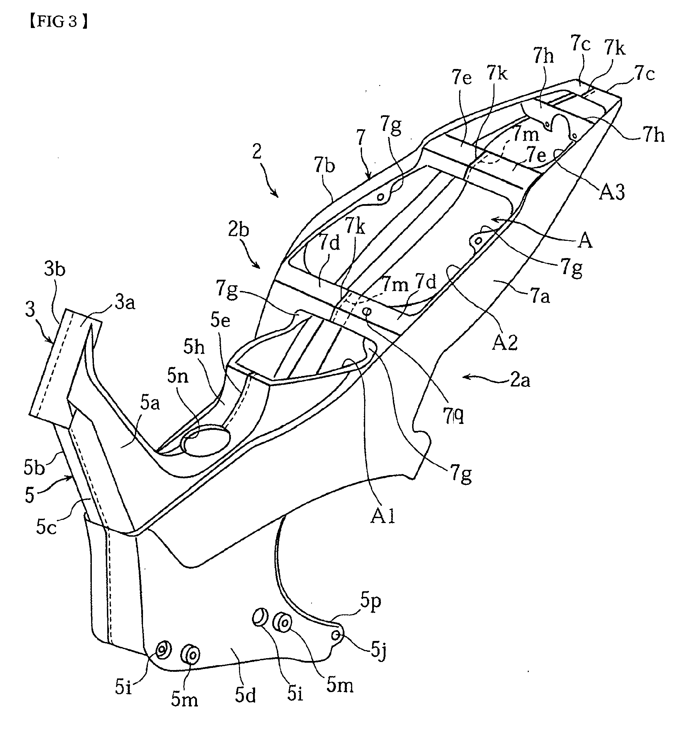

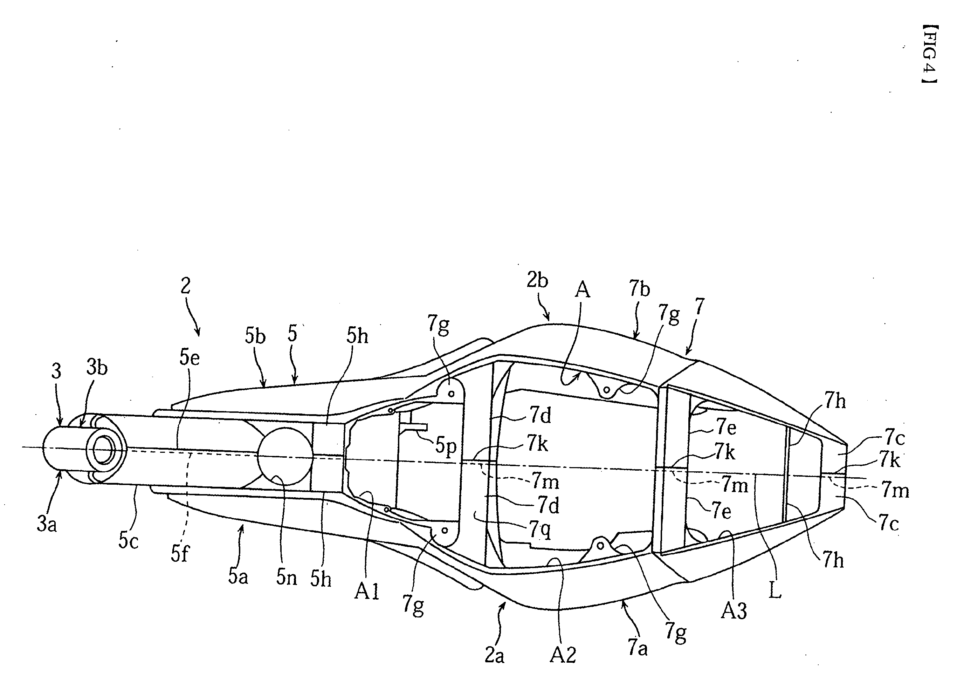

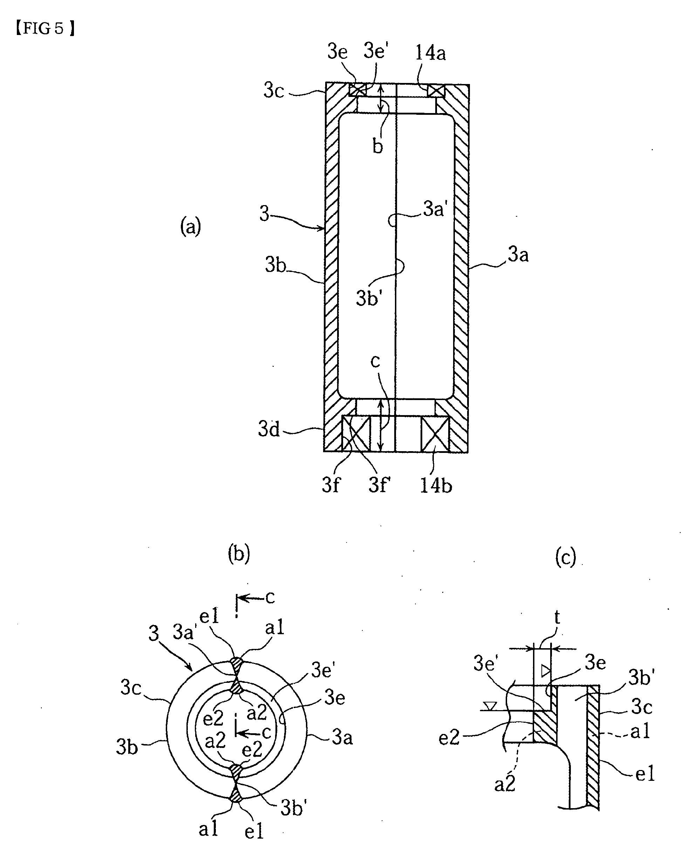

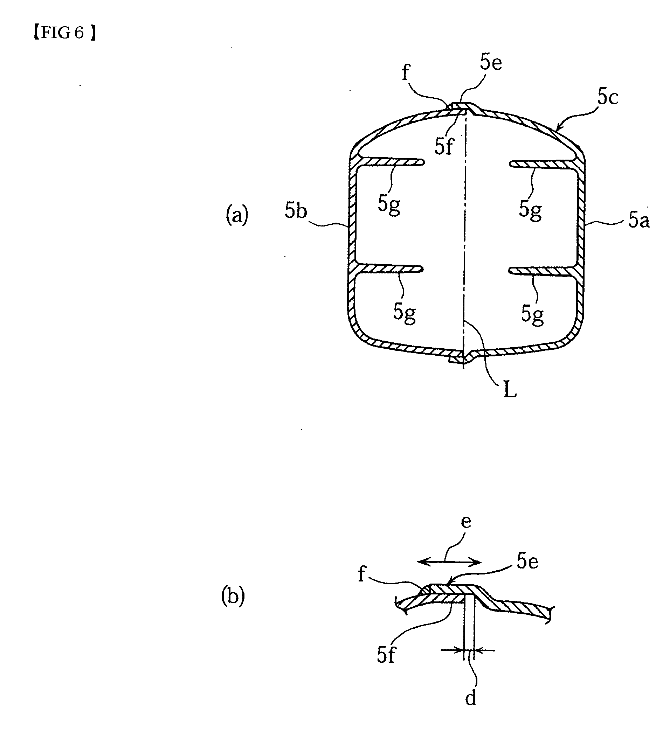

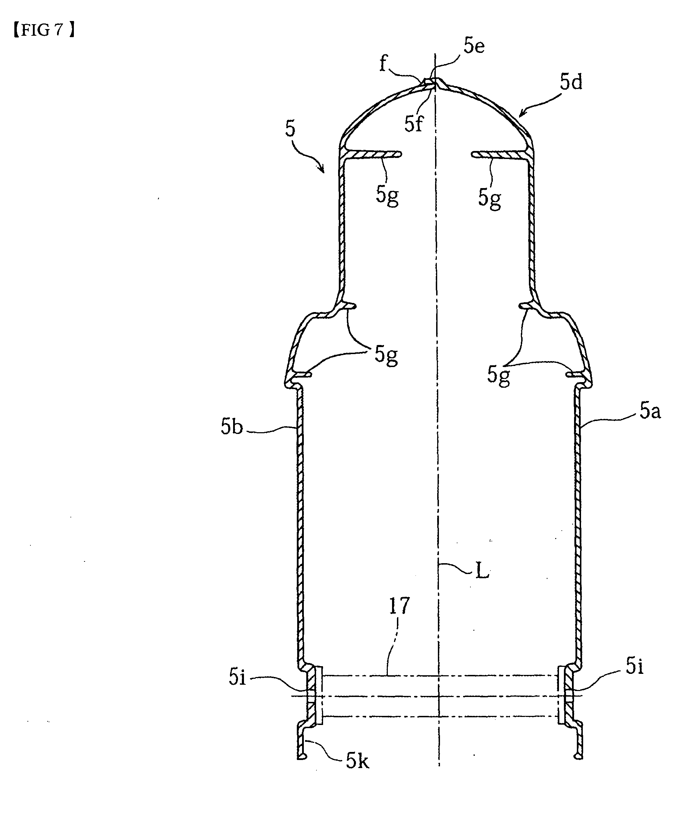

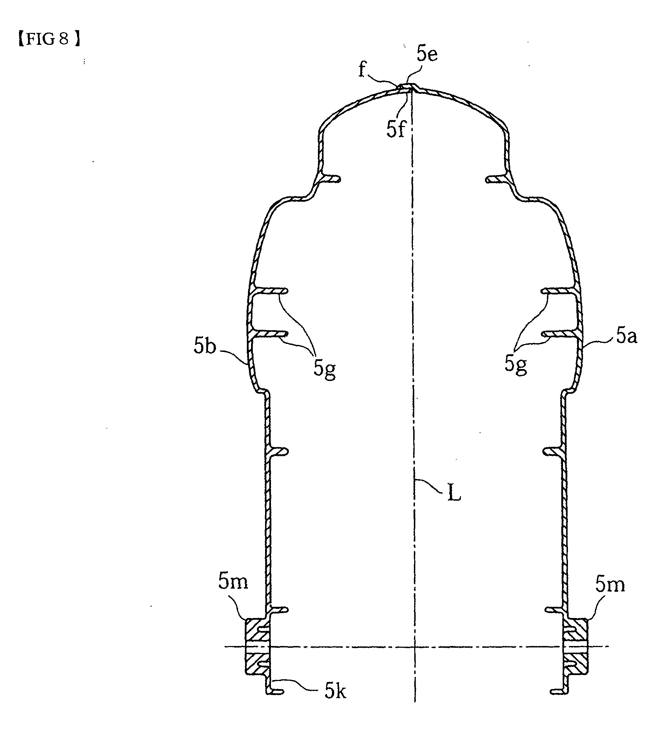

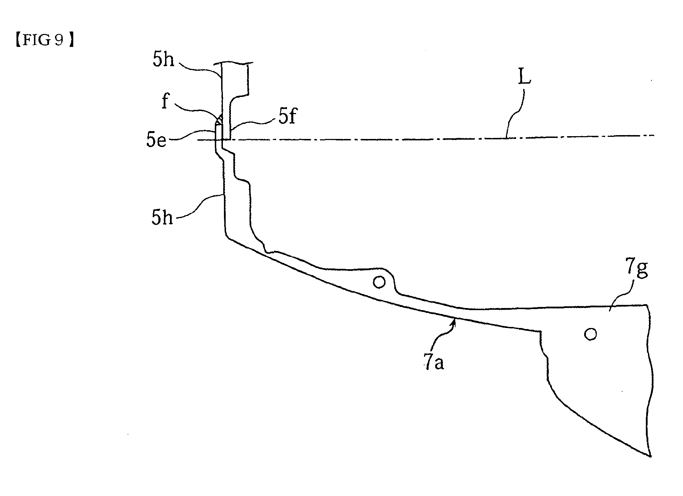

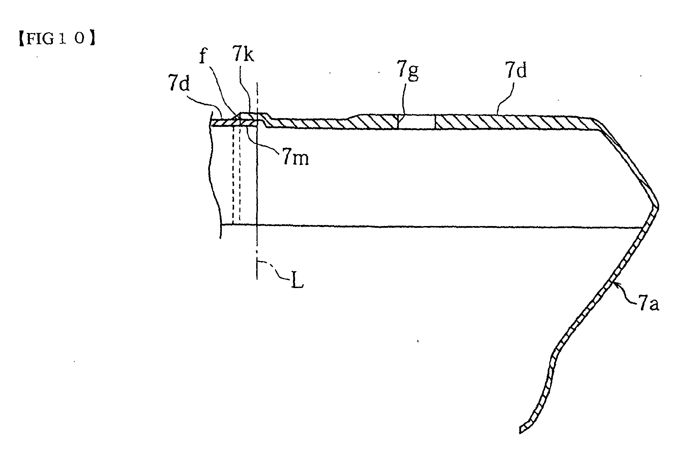

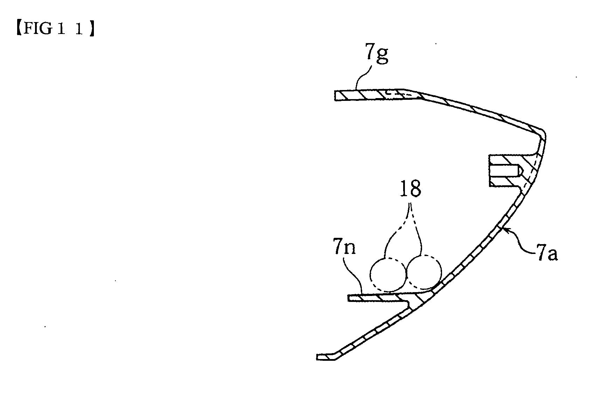

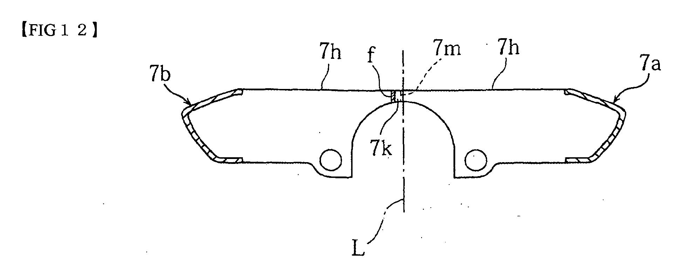

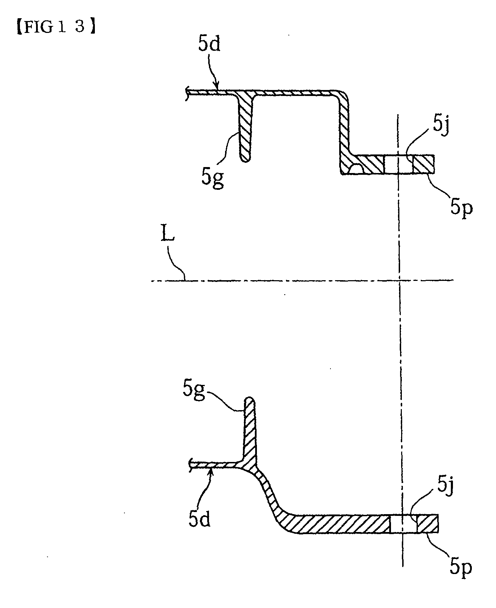

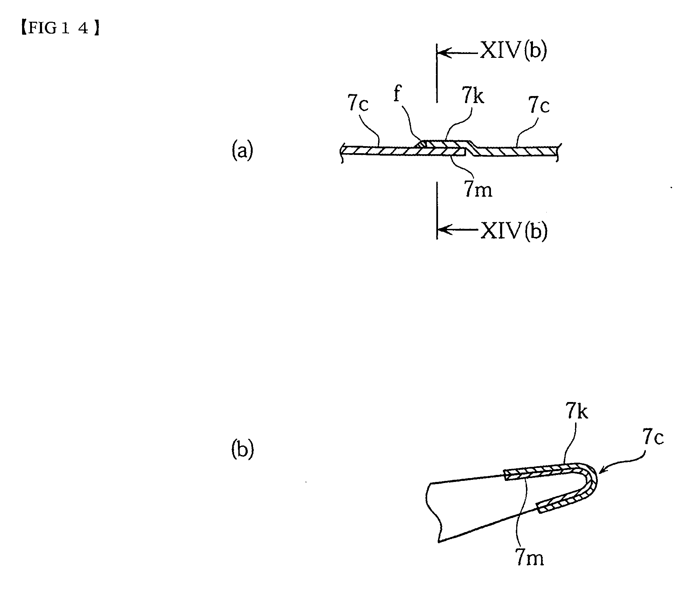

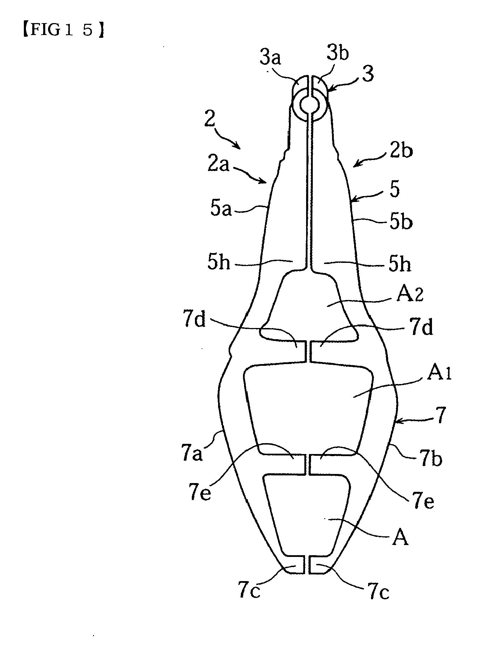

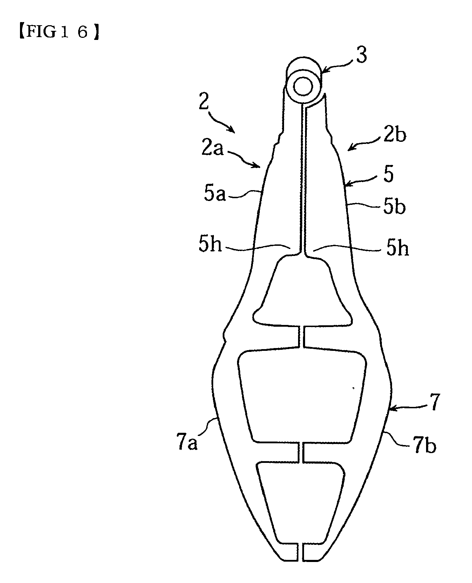

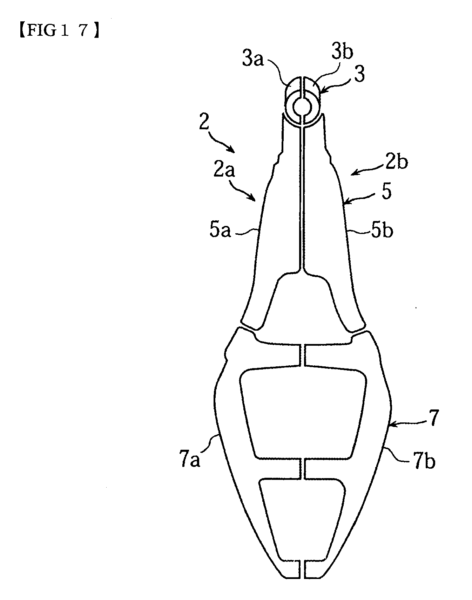

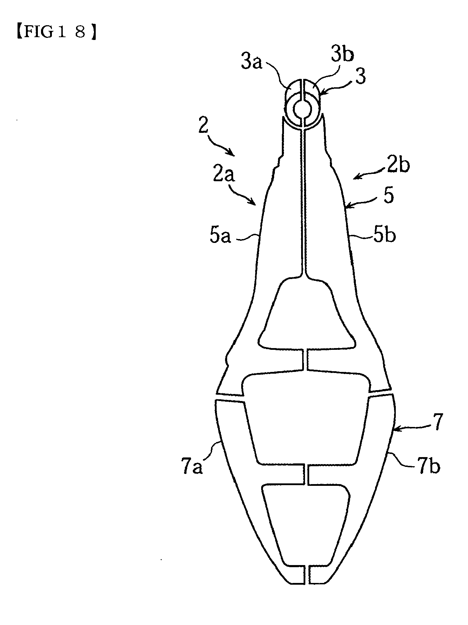

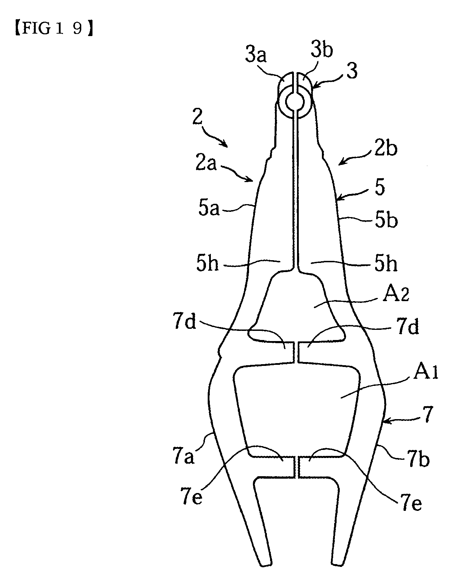

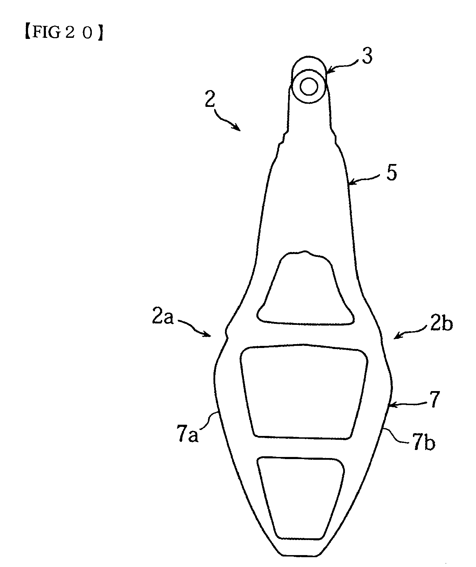

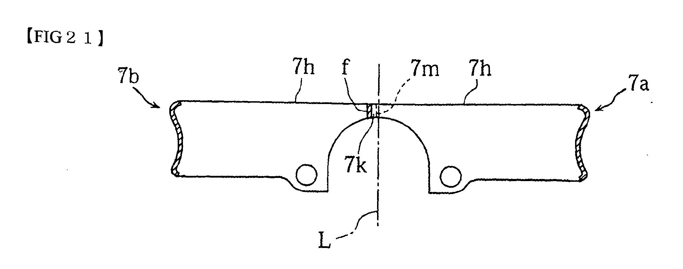

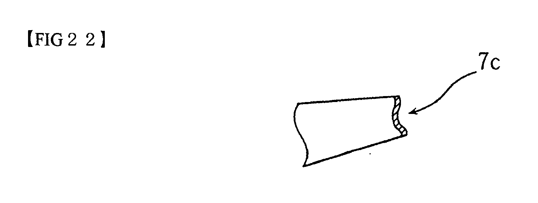

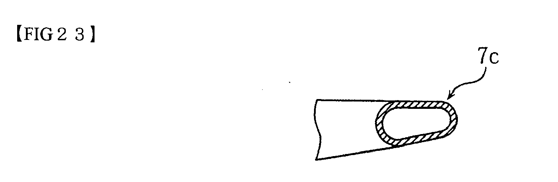

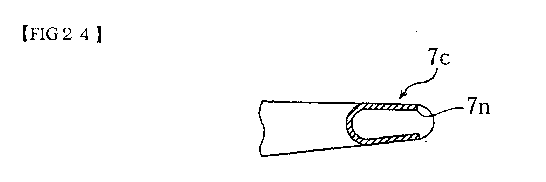

Figs. 1 to 15 are views illustrating a vehicle body frame for motorcycles, according to an embodiment, Fig. 1 is a left side view showing a motorcycle, to which the vehicle body frame according to the embodiment is applied, Figs. 2, 3 and 4, respectively, are a left side view, a perspective view, and a plan view showing the vehicle body frame, Fig. 5(a) is a cross sectional view showing a head pipe (a cross sectional view taken along the line V-V in Fig. 2), Fig. 5(b) is a plan view showing the head pipe, Fig. 5(c) is a cross sectional view showing an essential part of a bearing press-fitted part of the head pipe, Fig. 6(a) is a cross sectional view showing a main frame (a cross sectional view taken along the line VI-VI in Fig. 2), Fig. 6(b) is a cross sectional view showing a welded part of the main frame, Figs. 7 and 8 are cross sectional views showing the main frame (a cross sectional view taken along the line VII-VII and a cross sectional view taken along the line VIII-VIII in Fig. 2), Fig. 9 is a plan view showing a seat base of a rear frame (a view as viewed along an arrow IX in Fig. 2), Figs. 10, 11, and 12, respectively, are cross sectional views showing the rear frame (a cross sectional view taken along the line X-X, a cross sectional view taken along the line XI-XI, and a cross sectional view taken along the line XII-XII in Fig. 2), Fig. 13 is a cross sectional view showing a pivot of the main frame (a cross sectional view taken along the line XIII-XIII in Fig. 2), Fig. 14 is a cross sectional view showing a rear end cross portion, and Fig. 15 is a schematic view showing a frame configuration. In addition, front, rear, left, right, upper, and lower in the embodiment indicate the positional relationship as viewed in a state of being seated on a seat.

In the drawings, the reference numeral 1 denotes a motorcycle having the following schematic construction. A front fork 4 is supported by a head pipe 3 at a front end of a vehicle body frame 2 to be freely steered left and right, an engine unit 6 is supported by a rear portion of a main frame 5, which extends rearwardly of the head pipe 3, to freely swing vertically, and a main seat 8 and a tandem seat 8a are mounted on an upper surface of a rear frame 7, which extends rearward and obliquely upward from the main frame 5. The front fork 4 supports a front wheel 9 at a lower end thereof and arranges a steering handle 10 at an upper end thereof. Also, a rear wheel 11 is supported at a rear end of the engine unit 6 and a cushioning unit 12 for suspension of the rear wheel is arranged between a central portion of the engine unit 6 in a longitudinal direction and a front portion of the rear frame 7. A vehicle body cover 13 surrounds a periphery of that portion of the vehicle body frame 2, which extends from the head pipe 3 to the main frame 5.

The vehicle body frame 2 is formed by metal mold casting of an aluminum alloy, and comprises portions of a head pipe 3, portions of a main frame 5, and portions of a rear frame 7. More specifically, left and right frame pieces 2a, 2b, which form left and right portions of the vehicle body frame in a vehicle breadth direction, are formed by metal mold casting, and the left and right frame pieces 2a, 2b are joined together by welding.

The left and right frame pieces 2a, 2b comprise left and right head piece portions 3a, 3b, which form portions of the head pipe 3, left and right main piece portions 5a, 5b, which form portions of the main frame 5, and left and right rear piece portions 7a, 7b, which form portions of the rear frame 7. The left head piece portion 3a, the left main piece portion 5a, and the left rear piece portion 7a are formed integrally, and the right head piece portion 3b, the right main piece portion 5b, and the right rear piece portion 7b are formed integrally.

The portions of the head pipe 3 are cylindrical-shaped as shown in Fig. 5 and upper and lower ends thereof form bearing press-fitted portions 3c, 3d. Upper and lower bearing holes, into which upper and lower bearings 14a, 14b are press-fitted, are formed in the bearing press-fitted portions 3c, 3d by means of machining. The bearing holes include press-fitted surfaces 3e, 3f, into which outer peripheral surfaces of the bearings are press-fitted, and seat surfaces 3e', 3f, against which end surfaces of the bearings abut. In addition, since a larger load than that applied to the upper bearing 14a acts on the lower bearing 14b, the lower bearing 14b having a larger diameter than that of the upper bearing 14a is adopted.

Here, mating surfaces 3a', 3b' of the left and right head piece portions 3a, 3b are subjected to machining to be made flat butted surfaces free of casting burr or the like, and outer peripheral side edges and inner peripheral side edges of the butted surfaces are subjected to edge preparation whereby V-grooves a1, a2 are formed when the both mating surfaces are butted against each other. Portions of the V-grooves a1, a2 are weld-bonded in a state, in which the mating surfaces are butted against each other, so that weld traces e1, e2 are present on the portions of the V-grooves a1, a2.

A front portion of the V-groove a1 on the outer peripheral side is formed over an entire length of the head pipe 3 and a rear portion thereof is formed over an entire length of a portion except a joint with the main frame 5. Also, the V-groove a2 on the inner peripheral side is formed in that region, into which a welding torch can be inserted, and in a region (see Figs. 5(b) and 5(c)) extending axially centrally over bottom walls of the upper and lower bearing press-fitted portions 3c, 3d.

Also, the press-fitted surfaces 3e, 3f and the seat surfaces 3e', 3f, which define the bearing holes, are formed by the metal mold casting and the machining in an after-process of weld bonding. Inner peripheral sides of the mating surfaces must be weld-bonded after the machining. Hereupon, according to the embodiment, the V-groove a2 on the inner peripheral side is set to be deeper than a margin t for machining. As a result, weld traces e2 are present on inner peripheral surfaces of the press-fitted surfaces 3e, 3f after the machining.

The main frame 5 includes an inclined part 5c extending obliquely downward from the head pipe 3 toward the rear of the vehicle, and a suspension part 5d extending contiguous to the inclined part 5c and rearward to accommodate a fuel tank 15, etc. and to suspend the engine unit 6.

As shown in Fig. 6, a portion of the inclined part 5c is closed in cross section to be substantially rectangular-shaped in transverse cross section, and integrally formed therein with a plurality of reinforcement ribs 5g, which project inward in the vehicle breadth direction. As shown in Figs. 7 and 8, the suspension part 5d is in the form of a box with a lower end thereof opened, and a plurality of reinforcement ribs 5g are integrally formed in the suspension part 5d to project inward in the vehicle breadth direction.

Pivots 5p, 5p are formed on lower, rear ends of the left and right suspension parts 5d to project toward the rear of the vehicle. As shown in Fig. 13, the left pivot 5p is offset outward from the vehicle to separate from a vehicle center line L and the right pivot 5p is offset inward from the vehicle to approach the vehicle center line L, so that the pivot part for suspension of the engine is generally offset leftward from the vehicle.

Weld-bonded portions of the left and right main piece portions 5a, 5b, which form the inclined part 5c and the suspension part 5d, are structured as follows. Either of the left and right main piece portions 5a, 5b, that is, the left main piece portion 5a, is formed on a facing edge thereof with a joint flange portion 5e, which defines a vertically outwardly expanded step, and a joint edge 5f of the right main piece portion 5b is inserted inside the joint flange portion 5e to be arranged so as to vertically overlap the joint flange portion relatively movably in the vehicle breadth direction and relatively immovably vertically.

As shown in Figs. 7 and 8, the suspension part 5d is in the form of a box, of which a lower end is opened downward to include an article receipt port 5k, and an interior of the receipt port 5k defines a storage part to accommodate the fuel tank 15, etc.

A pair of front and rear bolt holes 5i, 5i are formed on a lower portion of the suspension part 5d to fix thereto a pair of front and rear support brackets 17, 17, which support the fuel tank 15. Also, an oil feed opening 5n is formed on an upper surface wall of the suspension part 5d, and an oil feed port 15a of the fuel tank 15 is positioned in the oil feed opening 5n. In addition, the reference numerals 5m, 5m denote foot board mount bosses.

Since the article receipt port 5k is formed at the lower end of the suspension part 5d as described above, the joint flange portion 5e is formed only on the upper side and the joint edge 5f overlaps the flange portion 5e relatively movably in the vehicle breadth direction and relatively immovably vertically. In addition, the support brackets 17, 17 act as cross members to ensure rigidity of the lower end of the suspension part 5d in the vehicle breadth direction.

Here, a little clearance d (see Fig. 6(b)) is provided between the step of the joint flange portion 5e and a tip end of the joint edge 5f whereby the joint flange portion 5e and the joint edge 5f are made relatively movable in the vehicle breadth direction (e direction) but relatively immovable vertically. A tip end of the joint flange portion 5e of the left main piece portion 5a and the joint edge 5f of the right main piece portion 5b are weld-bonded at overlapping portions thereof. The character f denotes a weld bead. The weld bead f extends along the vehicle center line L in a position offset substantially a width of the joint flange portion 5e from the vehicle center line L in the vehicle breadth direction.

The rear frame 7 is formed to cooperate with an upper rear edge 5h of the main frame 5 to define an annular shape as viewed in plan view (from above). Specifically, an annular portion having an annular opening A, which has a substantially rectangular shape being lengthy in the longitudinal direction of the vehicle, is formed by the upper rear edge 5h of the main frame 5, the left and right rear piece portions (left and right side portions) 7a, 7b integrally extending rearward from the upper rear edge 5h, and rear end cross portions (lateral side portions) 7c, 7c connecting rear ends of the both rear piece portions 7a, 7b together. More specifically, the left and right rear piece portions 7a, 7b expand outward from the rear edge 5h of the main frame 5 in the vehicle breadth direction to be inclined so as to be positioned inward as they go toward the rear end cross portions 7c as viewed in plan view, and are decreased in vertical dimension as they go rearward from the front as viewed in side view.

Here, while a part of the annular portion is formed by the main frame 5 and the remainder thereof is formed by the rear frame 7, the whole annular portion can be formed by the rear frame 7. Also, according to the embodiment, it can be said that the annular portions are formed in plural. That is, a middle annular portion A1 is formed by the rear edge 5h of the main frame 5, the left and right side portions 7a, 7b of the rear frame 7, and a rear cross portion (middle lateral side portion) 7e, and a front annular portion A2 is formed by the rear edge 5h of the main frame 5, the left and right side portions 7a, 7b of the rear frame 7, and a front cross portion (front lateral side portion) 7d. In addition, it can also be said that the middle annular portion A1 is formed by the left and right side portions of the rear frame 7, and the front and rear cross portions 7d, 7e, and accordingly, it can be considered that the middle annular portion A1 is formed only by the rear frame 7.

The left and right rear piece portions 7a, 7b of the rear frame 7 are formed integral with the front and rear cross portions 7d, 7e, which extend toward a center of the vehicle, and lamp support portions 7h, 7h, which are positioned between the rear cross portions 7e and the rear end cross portions 7c to extend toward the center of the vehicle. A rear lamp unit (not shown) is mounted to the lamp support portions 7h.

The front cross portions 7d, 7d, the rear cross portions 7e, 7e, the rear end cross portions 7c, 7c, and the lamp support portions 7h, 7h overlap together to be movable in the vehicle breadth direction and immovable in the longitudinal direction, and the overlapping portions are weld-bonded. Specifically, joint flange portions 7k, respectively, are formed on the cross portions 7d, 7e, 7c and the lamp support portion 7h on the left in a manner to define steps, and respective joint edges 7m on the right are inserted on inner surfaces of the joint flange portions 7k to be relatively movable in the vehicle breadth direction and relatively immovable vertically. The respective overlapping portions are joined by welding (see Figs. 10 and 12). Also, for the rear edges 5h of the left and right main piece portions 5a, 5b, the joint flange portion 5e and the joint edge 5f overlap each other longitudinally to be weld-bonded (see Fig. 9).

The front cross portions 7d are downward C-shaped in transverse cross section, the front cross portion 7d on the left is formed with a cushion mount hole 7q, which is positioned outwardly of the vehicle from the vehicle center line L, and an upper end of the cushioning unit 12 is connected to the mount hole 7q.

A plurality of seat bases 7g are formed on an edge of the opening A of the left and right rear piece portions 7a, 7b and the main seat 8 is supported by the seat bases 7g.

Upper edges of the left and right rear piece portions 7a, 7b function as bearing seats for a seat weight, and lower edges thereof function as a standing handle, which a driver grasps at the time of standing.

A space in the opening A of the left and right rear piece portions 7a, 7b makes an article storage space, and a battery 16a, a fuse box 16b, etc. are accommodated in a front opening A1 defined by the rear edges 5h, the left and right rear piece portions 7a, 7b, and the front cross portions 7d. An article storage box (not shown) sized to be able to accommodate a raincoat or the like is arranged in the middle opening A2 defined by the front cross portions 7d, the left and right rear piece portions 7a, 7b, and the rear cross portions 7e.

Further, a rib 7n functioning as a support bracket is formed on an inner surface of the left rear piece portion 7a, and an electric wiring 18, etc. is laid on the rib 7n. The front opening A1 and the middle opening A2 are covered by the main seat 8 to be openable and closable. Also, a rear opening A3 defined by the rear cross portions 7e and the rear end cross portions 7c is covered by the tandem seat 8a described above to be openable and closable. In addition, the rear opening A3 may be closed by forming upper wall portions, which extend inward, on the left and right rear piece portions.

Outer surfaces of the left and right rear piece portions 7a, 7b are not covered by the vehicle body cover 13 but exposed outside to function as an exterior part. The outer surfaces of the left and right rear piece portions 7a, 7b are subjected to buffing to give luster.

Here, a major part of the rear frame 7, specifically, portions of the left and right rear piece portions 7a, 7b except the respective cross portions 7c to 7e and the lamp support portion 7h define a curved cross sectional shape to be opened inward in the vehicle breadth direction as viewed in a transverse cross section cut by a plane perpendicular to the vehicle center line L. Also, the rear end cross portions 7c defines a curved cross sectional shape to be opened toward the front of the vehicle. The left and right rear end cross portions 7c are welded over a whole length of the curved shape.

The weld-bonding work of the left and right frame pieces 2a, 2b is performed in a state, in which the left and right frame pieces 2a, 2b are first set in a positioning jig, the left and right head piece portions 3a, 3b are butted against each other, and positioning is made by relatively moving the left and right main piece portions 5a, 5b and the left and right rear piece portions 7a, 7b between the joint flange portions 5e, 7k and the joint edges 5f, 7m in the vehicle breadth direction with the left and right head piece portions 3a, 3b as a reference. The welding work is performed to proceed from a portion having a small heat capacity to a portion having a large heat capacity, that is, in the order from a region being small in thickness or area to a region being large in thickness or area.

According to the embodiment, since the rear frame 7 is formed to define an annular shape as viewed in plan view and the left and right rear piece portions 7a, 7b are curved in shape to be opened toward an interior of the vehicle as viewed in transverse cross section, so that even in the case where the rear frame 7 is shaped to be large in width and lengthy in the longitudinal direction according to demand, it is possible to ensure rigidity for the rear frame 7 itself while restricting an increase in weight and complexity in construction.

That is, in the case where the rear frame is made generally cylindrical-shaped to extend rearward in a manner to cover an upper portion of the rear wheel, the frame is increased in surface area as the rear frame is made large in size, and an increase in weight is directly resulted. However, the rear frame 7 according to the embodiment is annular as viewed in plan view and the left and right rear piece portions 7a, 7b are curved in shape to be opened inward in the vehicle breadth direction as viewed in transverse cross section, so that the frame becomes necessity minimum in surface area, thus enabling restriction of a problem of an increase in weight.

Also, because of that construction, in which the left and right main piece portions 5a, 5b and the left and right rear piece portions 7a, 7b are weld-bonded, the left and right pieces are increased in configurational freedom and a necessary rigidity can be ensured while avoiding a problem of an increase in weight and complexity in shape, even in the case where, for example, the rear frame portion is made large in width and lengthy in the longitudinal direction.

In case of joining the left and right frame pieces, the rear end cross portions 7c, 7c define a curved shape and are welded over a whole periphery of the curved shape, so that it is possible to ensure a large weld length to enhance a joint strength. Also, as far as the cross portions 7c are curved in shape, molten metal becomes larger in volume than that in case of a flat plate, and molten metal spreads well at the time of casting.

Further, the left and right frame pieces correspond in cross sectional shape to a direction, in which a die is taken out, at the time of casting, so that it is possible to make simple a die structure at the time of casting.

Also, since the rear frame 7 can be made large as described above, the opening A of the rear frame 7 can be made large and a space in the opening A can be made an article storage space. Since the article storage space can be opened and closed by the seats 8, 8a, use as the article storage space can be made favorable. Further, since the seat bases 7g are formed on the rear arm 7, the seats 8, 8a can be supported in a simple construction without an increase in the number of parts.

Since the rear frame 7 is formed by casting of an aluminum alloy and subjected to buffing to give luster, it is caused to be exposed outside to be able to serve also as an exterior part, and any cover member can be dispensed with, thus enabling reducing parts in number.

Since the left and right main piece portions 5a, 5b and the left and right rear piece portions 7a, 7b are weld-bonded in a state of overlapping together to be relatively movable in the vehicle breadth direction and relatively immovable vertically, burr produced at the time of casting, which possibly remains on split surfaces of the respective pieces, interferes little with a split surface on the mating side, and positioning can be made by relatively moving the left and right main piece portions 5a, 5b and the left and right rear piece portions 7a, 7b in the vehicle breadth direction without application of deburring, thus enabling an improvement in productivity.

Also, dimensional errors of the left and right frame pieces 2a, 2b can be absorbed by relatively moving the respective frame pieces 2a, 2b in the vehicle breadth direction, and besides impossibility of relative movements in the vertical direction makes a guide in case of relative movements in the vehicle breadth direction, so that it is possible to surely position the left and right frame pieces 2a, 2b.

Also, since the split mating surfaces 3a', 3b' of the left and right head piece portions 3a, 3b are butted against each other, and the left and right main piece portions 5a, 5b and the left and right rear piece portions 7a, 7b are caused to overlap together in a manner to be made relatively movable in the vehicle breadth direction, positioning can be readily and accurately made by applying machining only on the split mating surfaces 3a', 3b' of the left and right head piece portions 3a, 3b, and relatively moving the left and right main piece portions 5a, 5b and the left and right rear piece portions 7a, 7b in the vehicle breadth direction with the split mating surfaces 3a', 3b' as a reference.

Also, since the left and right rear piece portions 7a, 7b define curved shapes to be opened inward, a portion interposed by the left and right curved shapes makes a space having a certain volume and the space can be made effective use of as an article storage space by providing a member that covers a bottom of the space.

Also, since the vehicle body frame 2 is formed by metal mold casting of an aluminum alloy, it is possible to achieve lightening of a whole motorcycle and to reduce parts in number.

In addition, while the embodiment has been described with respect to the case where the vehicle body frame 2 comprises the left and right frame pieces 2a, 2b, and the left and right frame pieces 2a, 2b comprise the left and right head piece portions 3a, 3b, the left and right main piece portions 5a, 5b, and the left and right rear piece portions 7a, 7b, which are respectively divided into a left portion and a right portion in the vehicle breadth direction, the vehicle body frame 2 of the invention is not limited to the configuration but can adopt various modifications.

For example, it is possible to adopt a configuration, in which a head pipe 3 is not divided, and the head pipe 3 is formed integral with either of left and right main piece portions 5a, 5b (in this example, the left main piece portion 5a) as shown in Fig. 16, a configuration, in which left and right main piece portions 5a, 5b and left and right rear piece portions 7a, 7b are divided into front portions and rear portions as shown in Fig. 17, and a configuration, in which left and right rear piece portions 7a, 7b are divided into front and rear portions as shown in Fig. 18. In this case, the respective portions thus divided are joined by welding. Also, joint may be made by bolting instead of welding, or joint may be made by bolting instead of a part of welding.

Also, while the embodiment has been described with respect to the case where the annular portion is formed by the rear edge of the main frame, the left and right side portions of the rear frame, and the rear end cross portion (lateral side portion), rear ends of the rear piece portions 7a, 7b may be opened as shown in Fig. 19.

Also, while the embodiment has been described with respect to the case where the vehicle body frame is divided into left and right portions, it is not necessarily required that the vehicle body frame 2 of the invention be divided, but a head pipe 3, a main frame 5, and a rear frame 7 may be partially or wholly formed integrally as shown in Fig. 20.

Also, while the embodiment has been described with respect to the case where the left and right rear piece portions (left and right side portions) 7a, 7b of the rear frame 7 and the rear end cross portions (lateral side portions) 7c are curved in shape to be opened inward in the vehicle breadth direction, these elements can adopt various modifications.

For example, the left and right side portions 7a, 7b may be curved in shape to be opened outward in the vehicle breadth direction as shown in Fig. 21. Also, the rear end cross portions 7c may be curved in shape to be opened rearward in the longitudinal direction of the vehicle as shown in Fig. 22. Further, the rear end cross portions 7c may have a cylindrical shape as viewed in a transverse cross section as shown in Fig. 23, and further an opening 7n may be formed on the cylindrical-shaped rear edge to be opened toward the rear of the vehicle.

The description above discloses (amongst others) an embodiment of a vehicle body frame comprising a head pipe, by which a handle is supported to be freely steered left and right, a main frame extending from the head pipe toward the rear of a vehicle, and a rear frame extending from the main frame toward the rear of the vehicle and above a rear wheel, and wherein the vehicle body frame includes an annular portion, which is annular as viewed in plan view, at least a part of the annular portion is formed by the rear frame, and left and right side portions, which form the annular portion of the rear frame, are curved in shape to be opened outwardly or inwardly of the annular portion as viewed in a transverse cross section across the left and right side portions.

With this embodiment, the vehicle body frame includes an annular portion, which is annular as viewed in plan view, at least a part of the annular portion is formed by the rear frame, and the left and right side portions and the lateral side portion of the annular portion are curved in shape to be opened outwardly or inwardly of the vehicle as viewed in transverse cross section, so that even in the case where the rear frame is shaped to be large in width and lengthy in the longitudinal direction according to demand, it is possible to ensure rigidity for the rear frame itself while restricting an increase in weight and complexity in construction.

That is, in the case where the rear frame is made generally cylindrical-shaped to extend rearward in a manner to cover an upper portion of the rear wheel, the frame is increased in surface area as the rear frame is made large in size, and an increase in weight is directly resulted. However, at least a part of the annular portion is formed by the rear frame, and the left and right side portions and the lateral side portion are curved in shape to be opened outward or inward in the vehicle breadth direction as viewed in transverse cross section, so that the frame becomes necessity minimum in surface area, thus enabling restriction of a problem of an increase in weight.

Also, since at least a part of the annular portion is formed by the rear frame, and the left and right side portions and the lateral side portion of the rear frame are curved-shaped in transverse cross section, the left and right side portions function as a reinforcement to enable enhancing rigidity as compared with a configuration, in which, for example, a pair of left and right rear frame members are arranged only in parallel. In this case, it is unnecessary to add a separate reinforcement member for enhancement in rigidity, or the like, and the construction is not made complicate.

According to a preferred embodiment, the annular portion is formed by a rear portion of the main frame, and the left and right side portions and a rear lateral side portion of the rear frame.

Further preferably, the annular portion is formed by a rear portion of the main frame, and the left and right side portions and a middle lateral side portion of the rear frame.

Still further preferably, the annular portion is formed by a rear portion of the main frame, and the left and right side portions and a front lateral side portion of the rear frame.

With these embodiments, since the annular portion formed by a rear portion of the main frame, and the left and right side portions and a rear, or middle, or front, lateral side portion of the rear frame, the lateral side portion for connection of the left and right side portions can be made use of to form the annular portion.

According to a further embodiment, the annular portion is formed by the left and right side portions and a lateral side portion of the rear frame.

Accordingly, since the annular portion is formed by the left and right side portions and the lateral side portion of the rear frame, that is, the annular portion is formed only by the rear frame, the construction can be correspondingly simplified.

According to another embodiment, the annular portions are formed in plural. With this embodiment, since the annular portions are formed in plural, the vehicle body frame can be further heightened in rigidity.

According to a further preferred embodiment, the vehicle body frame comprises left and right frame pieces, which are provided by integrally forming the head pipe, the main frame, and the rear frame and divided into a left portion and a right portion in a vehicle breadth direction, the left and right frame pieces being weld-bonded.

With this embodiment, the vehicle body frame comprises left and right frame pieces, which are provided by integrally forming the head pipe, the main frame, and the rear frame and divided into a left portion and a right portion in a vehicle breadth direction, and the left and right frame pieces are weld-bonded, so that because of being divided into the left and right portions, freedom in configurational setting is high and a desired annular portion can be readily formed while avoiding a problem of an increase in weight and complexity in construction. Also, in the case where the left and right frame pieces are manufactured by metal mold casting or metal mold forging, cross sectional shapes of the respective parts are readily made appropriate in construction with respect to a direction, in which a die is taken out, so that it is possible to make a die structure simple.

Beneficially, the main frame and the rear frame are divided.

Further beneficially, the rear frame is divided into a left portion and a right portion in a vehicle breadth direction, and still further beneficially the rear frame is divided into a front portion and a rear portion.

If the main frame and the rear frame are divided, and if the rear frame is divided into a left portion and a right portion in a vehicle breadth direction, and if the rear frame is divided into a front portion and a rear portion, the freedom in configurational setting of the respective parts is high and so the rear frame can be made large in width and lengthy in the longitudinal direction according to demand while avoiding a problem of an increase in weight and complexity in construction.

According to a further preferred embodiment, a space inside the annular portion makes an article storage space, and even further preferably the article storage space is covered by a seat to be openable and closable.

Thus, beneficially, the rear frame includes an annular portion and a space inside the annular portion can be made use of as an article storage space by providing a member that covers a bottom of the space, or the like. Also, beneficially, the article storage space is covered by a seat to be openable and closable, so that the space can be further made use of.

Still further beneficially, the left and right side portions of the rear frame serve as an exterior member.

With the above embodiment, the left and right side portions of the rear frame serve as an exterior member, that is, outer surfaces of the left and right side portions are subjected to buffing to give luster, so that any cover member, which covers the rear frame, can be dispensed with, thus enabling reducing parts in number.

Yet further beneficially, the left and right side portions are formed with seat bases.

With this embodiment, the left and right side portions are formed with seat bases, so that parts can be reduced in number and the construction can be made simple in the case where a seat is mounted on the left and right side portions of the rear frame.

According to another preferred embodiment, the lateral side portion is curved in shape to be opened outwardly or inwardly of the annular portion as viewed in transverse cross section.

Also, with this embodiment, the lateral side portion is formed to be curved as viewed in transverse cross section, so that the weld length can be lengthened and the joint strength can be enhanced by welding the lateral side portions over a whole periphery of the curved shape. Also, since the lateral side portion is curved in shape, it makes the volume larger than that in case of a structure in a flat plate, and molten metal spreads correspondingly well in case of manufacture by casting.

The description above still further provides a motorcycle comprising the vehicle body frame according to any one of embodiments above.

With this embodiment, the vehicle body frame is adopted in motorcycles, so that motorcycles can be provided to comprise a rear frame, which is shaped to be large in width and lengthy in a longitudinal direction according to demand.

The description above yet further preferably discloses, in order to provide a vehicle body frame enabling lightening while ensuring rigidity of a rear frame, an embodiment of a vehicle body frame including a head pipe 3, by which a handle 10 is supported to be freely steered left and right, a main frame 5 extending from the head pipe 3 to pivots 5p that support a rear wheel 11, and a rear frame 7 extending from the main frame 5 above the rear wheel 11, the rear frame 7 including left and right rear piece portions (side portions) 7a, 7b, and rear end cross portions (lateral side portions) 7c connecting the both rear piece portions, the rear frame cooperating with a rear edge 5h of the main frame 5 to define an annular shape as viewed in plan view, and the left and right rear piece portions 7a, 7b and the rear end cross portions 7c of the rear frame 7 defining curved shapes to be opened inward.

## Claims

1. Vehicle body frame comprising a head pipe, a main frame extending from the head pipe toward the rear of the vehicle, and a rear frame extending from the main frame toward the rear of the vehicle, wherein the body frame includes an annular portion being at least partially formed by the rear frame.

2. Vehicle body frame according to claim 1, wherein the annular portion is annular as viewed in plan view.

3. Vehicle body frame according to claim 1 or 2, comprising left and right side portions, which form the annular portion of the rear frame, and which are curved in shape to be opened outwardly or inwardly of the annular portion as viewed in a transverse cross section across the left and right side portions.

4. Vehicle body frame according to claim 3, comprising an annular portion formed by a rear portion of the main frame, and the left and right side portions and a rear lateral side portion of the rear frame, and/or an annular portion formed by a rear portion of the main frame, and the left and right side portions and a middle lateral side portion of the rear frame, and /or an annular portion formed by a rear portion of the main frame, and the left and right side portions and a front lateral side portion of the rear frame, and/or an annular portion formed by the left and right side portions and a lateral side portion of the rear frame.

5. Vehicle body frame according to one of the claims 1 to 4, wherein the several annular portions are provided.

6. Vehicle body frame according to one of the claims 1 to 5, comprising left and right frame pieces, which are provided by integrally forming the head pipe, the main frame, and the rear frame and divided into a left portion and a right portion in a vehicle width direction, the left and right frame pieces being weld-bonded.

7. Vehicle body frame according to one of the claims 1 to 5, wherein the main frame and the rear frame are divided.

8. Vehicle body frame according to one of the claims 1 to 5, wherein the rear frame is divided into a left portion and a right portion in a vehicle width direction.

9. Vehicle body frame according to one of the claims 1 to 5, wherein the rear frame is divided into a front portion and a rear portion.

10. Vehicle body frame according to one of the claims 1 to 9, wherein a space inside the annular portion makes an article storage space.

11. Vehicle body frame according to claim 10, wherein the article storage space is covered by a seat to be openable and closable.

12. Vehicle body frame according to one of the claims 3 to 11, wherein the left and right side portions of the rear frame serve as an exterior member.

13. Vehicle body frame according to one of the claims 3 to 12, wherein the left and right side portions are formed with seat bases.

14. Vehicle body frame according to one of the claims 4 to 13, wherein the lateral side portion is curved in shape to be opened outwardly or inwardly of the annular portion as viewed in transverse cross section.

15. Motorcycle comprising the vehicle body frame according to one of claims 1 to 14.
